(19) Europäisches Patentamt
European Patent Office
Office européen des brevets

(11) Veröffentlichungsnummer: **0 115 072**
**B1**

# (12) EUROPÄISCHE PATENTSCHRIFT

(45) Veröffentlichungstag der Patentschrift: **16.07.86**

(51) Int. Cl.⁴: **C 08 G 63/76**, C 08 G 18/46, C 08 G 18/68

(21) Anmeldenummer: **83113134.7**

(22) Anmeldetag: **27.12.83**

(54) **Neue Additionsprodukte aus olefinisch ungesättigten Polyester-polyolen und Alkylenpolyaminen, Verfahren zu deren Herstellung analog der Michael-Reaktion und deren Verwendung als Zusatzmittel für Kunststoffe auf Polyisocyanatbasis und zur Herstellung von Polyurethangruppen enthaltenden Polyisocyanuratschaumstoffen.**

(30) Priorität: **05.01.83 DE 3300156**

(43) Veröffentlichungstag der Anmeldung: **08.08.84 Patentblatt 84/32**

(45) Bekanntmachung des Hinweises auf die Patenterteilung: **16.07.86 Patentblatt 86/29**

(84) Benannte Vertragsstaaten: **AT BE CH DE FR GB IT LI NL SE**

(56) Entgegenhaltungen:
**FR - A - 1 365 866**
**US - A - 3 715 335**

(73) Patentinhaber: **BASF Aktiengesellschaft, Carl-Bosch-Strasse 38, D-6700 Ludwigshafen (DE)**

(72) Erfinder: **Horn, Peter, Dr., Neue Stuecker 15, D-6900 Heidelberg (DE)**
Erfinder: **Frank, Wolfram, Dr., Bergstrasse 162, D-6900 Heidelberg (DE)**
Erfinder: **Hesse, Anton, Dr., Peter-Nickel-Strasse 15, D-6940 Weinheim (DE)**
Erfinder: **Marx, Matthias, Dr., Seebacher Strasse 49, D-6702 Bad Duerkheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 115 072 B1

**Beschreibung**

Die Herstellung von Polyurethangruppen enthaltenden Polyisocyanuratschaumstoffen wird in zahlreichen Publikationen, Patenten und Patentanmeldungen beschrieben. Hierbei werden organische Polyisocyanate in Gegenwart von Katalysatoren und Hilfsmitteln partiell cyclisiert und die erhaltenen isocyanatgruppenhaltigen Isocyanurate mit Polyhydroxylverbindungen zur Reaktion gebracht. Vorzugsweise wird jedoch in Gegenwart von Polyhydroxylverbindungen die Trimerisierungs- und Polyadditionsreaktion der organischen Polyisocyanate gleichzeitig durchgeführt. Reine Polyisocyanuratschaumstoffe besitzen zwar eine hohe Temperaturbeständigkeit, sie sind jedoch sehr spröde. Die Sprödigkeit kann durch eine Erhöhung des Polyurethangruppengehaltes, d.h. durch Zusatz von Polyhydroxylverbindungen vermindert werden.

Nach einer bekannten Methode können Polyurethangruppen enthaltende Polyisocyanuratschaumstoffe in Form von Blöcken diskontinuierlich in Holz- oder Metallformen mit einem Rauminhalt von 1 bis 4 $m^3$ hergestellt werden. Die Verarbeitung der Aufbaukomponenten kann dabei sowohl manuell wie maschinell durchgeführt werden.

Nach dieser Verfahrensweise können technisch einwandfreie, quaderförmige Schaumstoffblöcke mit guter Ausbildung der Grund-, Seiten- und Oberfläche erhalten werden unter der Voraussetzung, das die Kennzahl (Isocyanat-Index), d.h. das Verhältnis von 100 × Isocyanat-Menge praktisch/Isocyanat-Menge berechnet nicht grösser als ungefähr 130 bis 150 ist.

Verwendet man dagegen Schaumstoff-Formulierungen für Polyurethangruppen enthaltende Polyisocyanuratschaumstoffe — im folgenden abgekürzt PUR/PIR-Schaumstoffe genannt — mit einer Kennzahl grösser als 150, so können nach dieser Methode in den beschriebenen grossen Formen zwar Schaumstoffblöcke hergestellt werden, die im Innern keinerlei Rissbildung und Kernverbrennung zeigen, die jedoch im Gegensatz zu Polyurethanschaumstoffblöcken folgende Mängel aufweisen:

Je nach Art der PUR/PIR-Formulierung besitzt die Grundfläche des erhaltenen Schaumstoffblocks eine mehr oder weniger grosse Anzahl von Löchern oder Lunkern, die tief, beispielsweise bis zu 8 cm oder tiefer in das Innere des Schaumstoffblockes hineinreichen. Bisweilen treten diese Löcher nur in den Randzonen der Blockgrundfläche, manchmal jedoch auch über die gesamte Grundfläche verteilt auf. Gelegentlich zeigt die Grundfläche ausserdem fleckenartig dunkelbraune Verfärbungen, die auf eine Entmischung von Polyisocyanat und Polyhydroxylverbindungen hindeuten. Diese Erscheinungen führen naturgemäss dazu, dass von der Grundfläche des Blocks eine bis zu 10 cm dicke Bodenplatte abgeschnitten werden muss, die meist als Abfall verworfen wird, wodurch die Ausbeute an verwertbarem Schaumstoff vermindert und die Herstellkosten erhöht werden.

Aufgrund vorliegender Erkenntnisse muss man annehmen, dass durch den grossen Polyisocyanatüberschuss in der PUR/PIR-Formulierung und die bekannte Unverträglichkeit von Polyisocyanaten und Polyhydroxylverbindungen sowie bedingt durch die bei der diskontinuierlichen Blockschaumstoffherstellung langsamen Schäumzeiten, es zu Entmischungen der Aufbaukomponenten kommt. Das Polyisocyanat reichert sich hierbei am Boden der Schäumform an, bis durch die fortschreitende Polyurethanbildung soviel Wärme frei wird, dass die Isocyanuratreaktion einsetzen kann.

Die Aufgabe der vorliegenden Erfindung bestand darin Zusatzmittel für PUR/PIR-Schaumstoffe zu entwickeln, mit denen die obengenannten Mängel beseitigt werden können.

Überraschenderweise wurde gefunden, dass durch den Zusatz von speziellen Additionsprodukten, die analog der Michael-Reaktion hergestellt werden, im wesentlichen einwandfreie Grundflächen bei der diskontinuierlichen Herstellung von PUR/PIR-Schaumstoffblöcken erhalten werden.

Gegenstand der Erfindung sind somit Additionsprodukte, die erhalten werden analog der Michael-Reaktion durch Umsetzung von

a) olefinisch ungesättigten Polyester-polyolen mit einer Funktionalität von 2 bis 6, vorzugsweise 2 bis 4,
einer Hydroxylzahl von 20 bis 800, vorzugsweise von 50 bis 700,
einer Säurezahl von 0 bis 15, vorzugsweise von 0,5 bis 10, und
einem Molekulargewichtsfaktor pro Doppelbindung von 150 bis 3000, vorzugsweise von 165 bis 2200 mit

b) 0,1 bis 1 Molen, vorzugsweise 0,2 bis 0,95 Molen, pro Mol olefinisch ungesättigter Doppelbindung der Komponente (a), eines Alkylenpolyamins der Formel

$$H_2N\text{-}R\text{-}NH\text{-}R'\text{-}X,$$

in der bedeuten:
X eine $NH_2$- oder OH-Gruppe,
R und R' gleiche oder verschiedene, lineare oder verzweigte Alkylenreste mit 2 bis 12 Kohlenstoffatomen.

Die Additionsprodukte werden hergestellt analog der Michael-Reaktion durch Umsetzung der genannten Aufbaukomponenten (a) und (b) in Gegenwart oder vorzugsweise in Abwesenheit von Lösungsmitteln bei Temperaturen von 10 bis 100°C, vorzugsweise von 20 bis 80°C und gegebenenfalls Abtrennung des Lösungsmittels.

Die erfindungsgemässen Michael-Additionsprodukte finden Verwendung als Zusatzmittel für Kunststoffe auf Basis von organischen Polyisocyanaten und insbesondere zur diskontinuierlichen Herstellung von Polyurethangruppen enthaltenden Polyisocyanuratschaumstoffen in Blockform.

Durch den Zusatz der erfindungsgemässen Additionsprodukte in Mengen von 0,5 bis 4 Gew.-%, vorzugsweise 1 bis 2 Gew.-%, bezogen auf das Gesamtgewicht an Additionsprodukt und üblicher Polyhydroxylverbindung, können im diskontinuierlichen Verfahren PUR/PIR-Schaumstoffe in Blöcken von 1 bis 4 $m^3$ hergestellt werden, deren Grundfläche keine oder praktisch keine Fehlstellen aufweisen. Dadurch kann der Verschnitt beim Aufschneiden der Blöcke zu Platten erheblich vermindert werden. Da das verwertbare Blockschaumvolumen vergrössert

wird, ergibt sich für die diskontinuierliche Blockschaumherstellung eine beachtliche Kostenminderung.

Zu den für die erfindungsgemässen Additionsprodukte, hergestellt analog der Michael-Reaktion, und PUR/PIR-Schaumstoffe verwendbaren Ausgangskomponenten ist folgendes auszuführen:

Als olefinisch ungesättigte Polyester-polyole (a) kommen in Betracht: Polykondensationsprodukte, die die obengenannten Merkmale erfüllen, aus mehrwertigen, insbesondere zweiwertigen Carbonsäuren und/oder deren veresterbare Derivate, insbesondere deren Anhydride, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäure enthalten, wobei zumindest ein Teil der Reste über ethylenisch ungesättigte reaktionsfähige Gruppen verfügen muss.

Als mehrwertige, insbesondere zweiwertige, gegebenenfalls ungesättigte Alkohole eignen sich die üblichen, insbesondere acyclische Gruppen, cyclische Gruppen als auch beide Arten von Gruppen aufweisenden Alkandiole und Oxalkandiole, wie z.B. Ethylenglykol, Propylenglykol-1,2, Propandiol-1,3, Butylenglykol-1,2 bzw. -1,3, Butandiol-1,4, Hexandiol-1,6, 2,2-Dimethylpropandiol-1,3, Diethylenglykol, Triethylenglykol, Polyethylenglykol mit Molekulargewichten bis 600, Cyclohexandiol-1,2, 2,2-Bis-(p-hydroxycyclohexyl)-propan, 1,4-Bis-methylolcyclohexan, Vinylglykol, Trimethylolpropan-monoallylether oder Butendiol-1,4.

Ferner können ein-, drei- oder höherwertige Alkohole, wie z.B. Ethylhexanol, Fettalkohole, Benzylalkohole, 1,2-Di-(allyloxy)-propanol-(3), Glycerin, Trimethylolpropan oder Pentaerythrit in untergeordneten Mengen mitverwendet werden. Die mehrwertigen, insbesondere zweiwertigen Alkohole werden im allgemeinen in annähernd stöchiometrischen Mengen mit mehrbasischen, insbesondere zweibasischen Carbonsäuren bzw. deren kondensierbaren Derivaten umgesetzt. Bei Verwendung von Dicarbonsäuren und zweiwertigen Alkoholen beträgt das Molverhältnis 1 : 1,15 bis 2, vorzugsweise 1 : 1,35 bis 2.

Geeignete Carbonsäuren bzw. deren Derivate sind zweibasische olefinisch ungesättigte, vorzugsweise α,β-olefinisch ungesättigte Carbonsäuren, wie z.B. Maleinsäure, Fumarsäure, Itaconsäure, Citraconsäure, Methylenglutarsäure und Mesaconsäure bzw. deren Ester oder vorzugsweise deren Anhydride. In die Polyester können weiterhin zusätzliche andere modifizierend wirkende zweibasische, ungesättigte und/oder gesättigte sowie aromatische Carbonsäuren oder -derivate, wie z.B. Bernsteinsäure, Glutarsäure, α-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure, einkondensiert sein, ferner ein-, drei- oder höherbasische Carbonsäuren, wie z.B. Ethyl-hexansäure, Fettsäuren, Methacrylsäure, Propionsäure, Benzoesäure, 1,2,4-Benzoltricarbonsäure oder 1,2,4,5-Benzoltetracarbonsäure.

Die ungesättigten Polyester-polyole werden im allgemeinen durch Schmelzkondensation oder Kondensation unter azeotropen Bedingungen aus ihren Komponenten hergestellt. Zur Herstellung der erfindungsgemässen Additionsprodukte können amorphe und gegebenenfalls kristallisierbare ungesättigte Polyester verwendet werden.

Wie bereits dargelegt wurde, besitzen die erfindungsgemäss als Michael-Akzeptoren verwendbaren olefinisch ungesättigten Polyester-Polyole (a) eine Funktionalität von 2 bis 6, vorzugsweise 2 bis 4 und insbesondere 2, eine Hydroxylzahl von 20 bis 800, vorzugsweise von 50 bis 700, eine Säurezahl von 0 bis 15, vorzugsweise von 0,5 bis 10 und einen Molekulargewichtsfaktor pro Doppelbindung von 150 bis 3000, vorzugsweise von 165 bis 2200.

Der Molekulargewichtsfaktor pro Doppelbindung wird erfindungsgemäss definiert als die Summe der Gewichtsmenge der Aufbaukomponenten pro Doppelbindung abzüglich des bei der Polykondensation abgespaltenen Kondensationsproduktes. Für ein ungesättigtes Polyester-polyol aus Fumarsäure, Adipinsäure und Diethylenglykol im Molverhältnis 1 : 0,5 : 2 errechnet sich danach der Molekulargewichtsfaktor pro Doppelbindung auf folgende Weise: Ein Mol Fumarsäure (Molgewicht 116) besitzt die Gewichtsmenge 116 g. 0,5 Mole Adipinsäure (Molgewicht 146) besitzen eine Gewichtsmenge von 73 g und 2 Mole Diethylenglykol (Molgewicht 106) eine Gewichtsmenge von 212 g. Die Summe der Gewichtsmengen beträgt somit 401 g. Zieht man hiervon die Gewichtsmenge von 3 Molen Kondensationswasser (Molgewicht 18) gleich 54 g ab, so erhält man als Molekulargewichtsfaktor pro Doppelbindung 347 g.

Für die erfindungsgemässen Additionsprodukte verwendbare Michael-Donatoren sind Alkylenpolyamide (b) der Formel

$$H_2N\text{-}R\text{-}NH\text{-}R'\text{-}X$$

in der bedeuten:

X eine OH- oder vorzugsweise $NH_2$-Gruppe,

R und R' verschiedene oder vorzugsweise gleiche, verzweigte oder vorzugsweise lineare Alkylenreste mit 2 bis 12, vorzugsweise 2 bis 6 Kohlenstoffatomen.

Geeignet sind ferner solche Alkylenpolyamine (b), in denen die Alkylenreste R und/oder R' als Brückenglieder -O-, -S-, -CO- und/oder $-SO_2-$ Atome bzw. Gruppen gebunden enthalten.

Vorzugsweise Anwendung finden als Alkylenpolyamine Aminoalkylalkanolamine mit jeweils 2 bis 6 Kohlenstoffatomen im Alkyl- und Alkanolrest und insbesondere Dialkylentriamine mit 2 bis 6 Kohlenstoffatomen in den Alkylenresten R und/oder R'.

Als Alkylenpolyamine seien im einzelnen beispielhaft genannt: Aminoalkylalkanolamine, wie z.B. Aminoethyl-, Aminobutyl-, Aminohexylhexanolamin, Aminopropyl-, Aminobutylbutanolamin, Aminoisopropylethanolamin und vorzugsweise Aminoethylethanolamin und Aminoethylisopropanolamin und Dialkylentriamine, wie z.B. Ethylen-butylen-, Ethylen-hexamethylen-, Dihexamethylen-, Ethylenether--ethylen-, Propylenether-ethylen-triamin und vorzugsweise Diethylentriamin, Di-1,3- oder -1,2-propylentriamin und Dibutylentriamine. Die Aminoalkylalkanolamine und/oder Dialkylentriamine können einzeln oder in Form von Mischungen eingesetzt werden.

Zur Herstellung der erfindungsgemässen Michael-Additionsprodukte werden die olefinisch ungesättigten Polyester-polyole (a) und Alkylenpolyamine (b) in Gegenwart oder vorzugsweise Abwesenheit von Lösungsmitteln bei Temperaturen von 10 bis 100°C, vorzugsweise von 20 bis 80°C in solchen Mengen zur Reaktion gebracht, dass pro Mol olefinisch ungesättigter Doppelbindung 0,1 bis 1 Mole, vorzugsweise 0,2 bis 0,95 Mole Alkylenpolyamine zu Beginn der Umsetzung in der Reaktionsmischung vorliegen. Hierbei hat es sich als vorteilhaft erwiesen, die Additionsreaktion durch geeignete Wahl der Mengenverhältnisse der Aufbaukomponenten oder Mitverwendung von Lösungsmitteln so zu führen, dass im wesentlichen keine Vernetzungsreaktion zwischen den olefinisch ungesättigten Polyester-polyolen eintritt. Sofern die Additionsreaktion in Gegenwart von Lösungsmitteln durchgeführt wird, werden diese nach beendeter Reaktion wieder, beispielsweise durch Destillation unter vermindertem Druck, abgetrennt. Als geeignete Lösungsmittel seien beispielhaft genannt: Xylol, Methylenchlorid, Aceton, Methylethylketon und vorzugsweise Toluol.

Da die Addition der primären Aminogruppen der Alkylenpolyamine an die ethylenisch ungesättigte Doppelbindung der Polyester-polyole rasch verläuft, sind bei den genannten Temperaturen Reaktionszeiten von 0,2 bis 2, vorzugsweise von 0,5 bis 1 Stunden ausreichend.

Die erfindungsgemässen Additionsprodukte finden Verwendung als Zusatzmittel für Kunststoffe auf Polyisocyanatbasis. Besonders bewährt haben sie sich und daher vorzugsweise verwendet werden sie zur diskontinuierlichen Herstellung von Polyurethangruppen enthaltenden Polyisocyanuratschaumstoffen in grossen Blöcken.

Die Additionsprodukte werden hierzu mit üblichen Polyhydroxylverbindungen der Polyurethanchemie gemischt.

Geeignete Mischungen — im folgenden auch Polyester-polyol-Mischungen genannt — enthalten zweckmässigerweise 0,5 bis 4 Gew.-%, vorzugsweise 1 bis 2 Gew.-%, bezogen auf das Gesamtgewicht, mindestens eines erfindungsgemässen Additionsproduktes und 99,5 bis 96 Gew.-%, vorzugsweise 99 bis 98 Gew.-%, bezogen auf das Gesamtgewicht, mindestens einer Polyhydroxylverbindung mit einer Funktionalität von 2 bis 8 und einer Hydroxylzahl von 150 bis 800.

Als übliche Polyhydroxylverbindungen mit einer Funktionalität von 2 bis 8 und einer Hydroxylzahl von 150 bis 800 kommen Polyester-polyole und vorzugsweise Polyether-polyole in Betracht. Verwendbar sind jedoch auch andere Hydroxylgruppen enthaltende Polymere, beispielsweise Polyesteramide, Polyacetale und aliphatische Polycarbonate oder deren Gemische, sofern sie die obengenannten Bedingungen hinsichtlich Funktionalität und Hydroxylzahl erfüllen.

Geeignete Polyester-polyole besitzen eine Funktionalität von 2 bis 6, vorzugsweise von 2 bis 4 und eine Hydroxylzahl von 150 bis 700, vorzugsweise von 280 bis 700 und werden hergestellt aus organischen Dicarbonsäuren, vorzugsweise aliphatischen Dicarbonsäuren mit 2 bis 12, vorzugsweise 4 bis 8 Kohlenstoffatomen im Alkylenrest und mehrwertigen Alkoholen, vorzugsweise Diolen mit 2 bis 10 Kohlenstoffatomen, vorzugsweise 2 bis 6 Kohlenstoffatomen.

Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure. Beispiele für zwei- und mehrwertige, insbesondere zweiwertige Alkohole sind: 1,2- bzw. 1,3-Propylenglykol, Dipropylenglykol, 1,5-Pentamethylenglykol, 1,8-Octamethylenglykol, Decamethylenglykol-1,10, Glycerin, Trimethylolpropan, Pentaerythrit sowie Zuckeralkohole, z.B. Sorbit und vorzugsweise Ethylenglykol, Diethylen-glykol, 1,4-Butylenglykol und 1,6-Hexamethylen-glykol. Als mehrwertige Alkohole können ferner Alkanolamine, Dialkanolamine und Trialkanolamine, z.B. Ethanolamin, Diethanolamin, Triethanolamin und Triisopropanolamin verwendet werden. Die genannten Dicarbonsäuren und mehrwertigen Alkohole können auch in Form von Mischungen eingesetzt werden. Besonders bewährt haben sich und daher vorzugsweise verwendet werden Polyester-polyole aus Adipinsäure oder Mischungen aus Bernstein-, Glutar- und Adipinsäure und Diethylenglykol und Alkoholmischungen aus Ethylenglykol/1,4-Butylenglykol, Ethylenglykol/Diethylenglykol, Ethylenglykol/Trimethylolpropan, Diethylenglykol/Trimethylolpropan, Ethylenglykol/Pentaerythrit, Ethylenglykol/Triisopropanolamin und Diethylenglykol/Triisopropanolamin.

Vorzugsweise als übliche Polyhydroxylverbindungen verwendet werden jedoch Polyether-polyole mit Funktionalitäten von 2 bis 8, vorzugsweise 2 bis 4 und Hydroxylzahlen von 150 bis 800, vorzugsweise von 250 bis 700, die nach bekannten Verfahren, beispielsweise durch anionische Polymerisation mit Alkalihydroxiden, wie Natrium- oder Kaliumhydroxid oder Alkalialkoholaten, wie Natriummethylat, Kalium- oder Natriumethylat oder Kaliumisopropylat als Katalysatoren oder durch kationische Polymerisation mit Lewissäuren, wie Antimonpentachlorid, Bortrifluorid-Etherat u.a. als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie

gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan. Als Polyether-polyole, hergestellt aus Verbindungen der erwähnten Gruppe sind besonders interessant N,N,-N',N'-Tetrakis-(2-hydroxyethyl)-ethylendiamin, N,-N,N',N'-Tetrakis-(2-hydroxypropyl)-ethylendiamin, N,N,N',N'',N''-Pentakis-(2-hydroxypropyl)-diethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethylethanolamin, N-Methyl- und N--Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan, Pentaerythrit, Sorbit und Saccharose.

Die genannten Polyhydroxylverbindungen können einzeln oder als Gemische Anwendung finden.

Zur Herstellung der PUR/PIR-Schaumstoffe können aliphatische, cycloaliphatische, araliphatische und vorzugsweise aromatische mehrwertige Isocyanate eingesetzt werden. Im einzelnen seien beispielhaft genannt: Alkylendiisocyanate mit 4 bis 12 Kohlenstoffatomen im Alkylenrest, wie 1,12-Dodecamethylen-diisocyanat, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophorondiisocyanat), 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate wie 4,4'-, 2,4'- und 2,2'-Diisocyanato-diphenylmethyn und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäss DE-PS 1 092 007, Allophanatgruppen aufweisende Polyisocyanate, wie sie z.B. in der britischen Patentschrift 994 890, den ausgelegten Unterlagen des belgischen Patents 761 626 und der NL-OS 7 102 524 beschrieben werden, Isocyanuratgruppen aufweisende Polyisocyanate wie sie z.B. in den DE-PS 1 022 789, 1 222 067 und 1 027 394 sowie den DE-OS 1 929 034 und 2 004 048 beschrieben werden, Urethangruppen aufweisende Polyisocyanate, wie sie z.B. in den ausgelegten Unterlagen des belgischen Patents 752 261 oder den US-PS 3 394 164 beschrieben werden, acylierte Harnstoffgruppen aufweisende Polyisocyanate z.B. gemäss DE-PS 1 230 778, Biuretgruppen aufweisende Polyisocyanate z.B. gemäss DE-PS 1 101 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 1 231 688 genannt werden.

Vorzugsweise kommen jedoch zur Anwendung: urethangruppenhaltige Polyisocyanate, Beispielsweise mit niedermolekularen Diolen, Triolen oder Polyoxypropylen- und/oder Polyoxyethylen-glykolen modifiziertes 4,4'-Diphenylmethan-diisocyanat, Toluylen-diisocyanat oder Mischungen aus Diphenylmethan-diisocyanaten und Polyphenyl-polymethylen-polyisocyanaten, Carbodiimidgruppen und/ oder Isocyanuratringe enthaltende Polyisocyanate, z.B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Zu Treibmitteln, welche zur Herstellung der PUR/ PIR-Schaumstoffe verwendet werden können, gehört Wasser, das mit Isocyanatgruppen unter Bildung von Kohlendioxid reagiert. Die Wassermengen, die zweckmässigerweise verwendet werden, betragen 0,1 bis 3 Gew.-%, bezogen auf das Gewicht an Polyisocyanat, bzw. 0,1 bis 2 Gew.-%, bezogen auf das Gesamtgewicht der schaumfähigen Reaktionsmischung. Gegebenenfalls können auch grössere Wassermengen verwendet werden.

Andere verwendbare Treibmittel sind niedrig siedende Flüssigkeiten, die unter dem Einfluss der exothermen Polymerisations- bzw. Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmässigste Menge an niedrigsiedender Flüssigkeit zur Herstellung der Schaumstoffe hängt ab von der Schaumstoffdichte, die man erreichen will sowie gegebenenfalls von der Mitverwendung von Wasser. Im allgemeinen liefern Mengen von 5 bis 40 Gew.-%, bezogen auf 100 Gewichtsteile organisches Polyisocyanat, bzw. 2 bis 30%, bezogen auf

das Gesamtgewicht von schaumfähiger Reaktionsmischung, zufriedenstellende Ergebnisse. Zur Herstellung von Integralschaumstoffen werden nur inerte, niedrig siedende Flüssigkeiten verwendet.

Zur Herstellung der PUR/PIR-Schaumstoffe haben sich die üblichen Cyclisierungs- und Polymerisationskatalysatoren für Polyisocyanate bewährt.

Als Beispiele seien genannt: starke Basen, wie quarternäre Ammoniumhydroxide, beispielsweise Benzyltrimethylammoniumhydroxid; Alkalimetallhydroxide, beispielsweise Natrium- oder Kaliumhydroxid; Alkalimetallalkoxide, beispielsweise Natriummethylat und Kaliumisopropylat; Trialkylphosphine, beispielsweise Triethylphosphin; Alkylaminoalkylphenole, beispielsweise 2,4,6-Tris-(dimethylaminomethyl)-phenol; 3- und/oder 4-substituierte Pyridine, beispielsweise 3- oder 4-Methylpyridin; metallorganische Salze, beispielsweise Tetrakis-(hydroxyethyl)-natriumborat; Friedel-Crafts-Katalysator, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-ethyl-hexoat, Kalium-benzoat, Natriumpikrat und Phthalimid-kalium. Vorzugsweise verwendet werden die stark basischen N,N',N''-Tris-(dialkylaminoalkyl)-s-hexahydrotriazine, beispielsweise das N,N',N''-Tris(dimethylaminopropyl)-s-hexahydrotriazin, gegebenenfalls in Kombination mit aliphatischen niedermolekularen Mono- und/oder Dicarbonsäuren, beispielsweise Essigsäure und/oder Adipinsäure oder aromatischen Carbonsäuren, wie Benzoesäure.

Die geeignete Menge an Isocyanuratgruppen bildenden Katalysatoren ist abhängig von der Wirksamkeit des in Frage kommenden Katalysators. Im allgemeinen hat es sich als zweckmässig erwiesen, 1 bis 15 Gewichtsteile, vorzugsweise 3,5 bis 10 Gewichtsteile Katalysator für jeweils 100 Gewichtsteile an organischem Polyisocyanat zu verwenden.

Geeignete Katalysatoren zur Beschleunigung der Polyurethanbildung zwischen den Polyester-polyol-Mischungen, gegebenenfalls Wasser und den Polyisocyanaten sind beispielsweise tertiäre Amine, wie Dimethylbenzylamin, N,N,N',N'-Tetramethyldiamino-ethylether, Bis-(dimethylaminopropyl)-harnstoff, N-Methyl- bzw. N-Ethylmorpholin, Dimethylpiperazin, 1,2-Dimethylimidazol, 1-Aza-bicyclo-(,3,3,0)-octan und vorzugsweise Tri-ethylendiamin, Metallsalze, wie Zinndioctoat, Bleioctoat, Zinn-diethylhexoat und vorzugsweise Zinn-(II)salze und Dibutylzinndilaurat sowie insbesondere Mischungen aus tert. Aminen und organischen Zinnsalzen. Vorzugsweise verwendet werden 0,1 bis 5,0 Gew.-% Katalysator auf Basis tertiärer Amine und/oder 0,01 bis 1,0 Gew.-% Metallsalze, bezogen auf das Gewicht der Polyester-polyol-Mischung.

Zur Herstellung der PUR/PIR-Schaumstoffe werden die die Urethan- und Isocyanuratgruppenbildung fördernden Katalysatoren zweckmässigerweise gemischt.

Der schaumfähigen Reaktionsmischung aus Polyisocyanat, Polyester-polyol-Mischung, Katalysator und Treibmittel können, wie bereits ausgeführt wurde, gegebenenfalls noch Hilfs- und Zusatzstoffe einverleibt werden. Genannt seien beispielsweise Kettenverlängerungsmittel, organische und anorganische Füllstoffe, oberflächenaktive Schaumstabilisatoren, Hydrolyseschutzmittel, Porenregler, fungistatisch und bakteriostatisch wirkende Substanzen, Farbstoffe, Pigmente und Flammschutzmittel.

Die PUR/PIR-Schaumstoffe können ohne zusätzliche Mitverwendung von üblichen Kettenverlängerungsmitteln oder Vernetzern hergestellt werden. Dennoch hat es sich in manchen Fällen, beispielsweise aus verarbeitungstechnischen Gründen, als zweckmässig erwiesen, Kettenverlängerungsmittel oder Vernetzer einzusetzen. Geeignete Kettenverlängerungsmittel oder Vernetzer besitzen Molekulargewichte von 30 bis 600, vorzugsweise 60 bis 300 und weisen vorzugsweise zwei aktive Wasserstoffatome auf. In Betracht kommen beispielsweise aliphatische und/oder aromatische Diole mit 2 bis 14, vorzugsweise 2 bis 6 Kohlenstoffatomen, wie 1,2- bzw. 1,3-Propandiol, Pentandiol-1,5, Hexandiol-1,6 und vorzugsweise Ethandiol, Butandiol-1,4 und Bis-(2-hydroxyethyl)-hydrochinon, Diamine, wie Ethylendiamin und gegebenenfalls 3,3'- bzw. 3,3',5,5'-di- bzw. tetraalkylsubstituierte 4,4'-Diaminodiphenylmethane, Ethanolamine, wie Triethanolamin und mehrwertige Alkohole, wie Glycerin, Trimethylolpropan und niedermolekulare hydroxylgruppenhaltige Polyalkylenoxide aus den vorgenannten Ausgangstoffen.

Den erfindungsgemäss verwendbaren Polyester-polyol-Mischungen können auch Füllstoffe, beispielsweise organische und anorganische Füllstoffe, mit Teilchengrössen kleiner als 10 µm, vorzugsweise von 0,1 µm bis 5 µm in Mengen von 5 bis 30 Gew.-%, vorzugsweise von 10 bis 20 Gew.-%, bezogen auf das Gesamtgewicht der Pokyester-polyol-Mischung einverleibt bleiben.

Als organische Füllstoffe seien beispielhaft genannt: Sprödharze, wie sie bekannt sind als Bindemittel für die Druckindustrie, z.B. solche auf Basis Phenol, Kolophonium oder Melamin und Formaldehyd, Polyester mit Schmelzpunkten grösser als 35°C, z.B. lineare oder vernetzte Polyester auf Basis von di- oder höherfunktionellen Carbonsäuren mit Di- oder mit Monomeren, wie (Meth)-acrylsäurederivaten, Homo- und Copolymerisate des Cyclopentadiens, Ketonharze, z.B. auf Basis von Cyclohexanon und spröde Polyurethanmaterialien mit Schmelzpunkten über 35°C oder vorzugsweise grösser als 190°C, beispielsweise vernetzte Polyurethane und Isocyanuratgruppen enthaltende Polyurethane, Polyvinylchlorid, Polyamid-6 und -6,6, Acrylatpfropfkautschuke, Butadienpfropfkautschuke sowie Polyvinylacetat.

Bewährt haben sich ferner anorganische Füllstoffe, wie die an sich bekannten üblichen Füllstoffe, Verstärkungsmittel, Beschwerungsmittel, Mittel zur Verbesserung des Abriebsverhaltens in Anstrichfarben, Beschichtungsmittel usw. Verwendet werden können jedoch auch anorganische Pigmente. Im einzelnen seien beispielhaft genannt: silikatische Mineralien, beispielsweise Schichtsilikate, wie Antigorit, Serpentin, Hornblenden, Amphibole, Chrisotil, Talkum, Metalloxide, wie Kaolin, Aluminiumoxidhydrat, Titanoxide, Eisenoxide, Metallsalze, wie Kreide, Schwerspat, Bariumsulfat, anorganische Pigmente, wie Calciumsulfid, Zinksulfid sowie Glas.

Als Hilfsmittel genannt seien ferner beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,1 bis 5 Gewichtsteilen pro 100 Gewichtsteile der schaumfähigen Reaktionsmischung angewandt werden.

Geeignete Flammschutzmittel sind beispielsweise Trikresylphosphat, Tris-2-chlorethylphosphat, Trischlorpropylphosphat und Tris-2,3-dibrompropylphosphat, bromierte und chlorierte Polyether, Umsetzungsprodukte von bromierten und/oder chlorierten aromatischen Dicarbonsäureanhydriden mit bi- und höherfunktionellen Alkoholen wie beispielsweise Ethylenglykol, Diethylenglykol und Glycerin.

Ausser den bereits genannten halogensubstituierten Phosphaten können auch anorganische Flammschutzmittel, wie Antimontrioxid, Arsenoxid, Ammoniumphosphat, Ammoniumsulfat, Alkalimetallsalze der unterphosphorigen Säure, Aluminiumoxidhydrat und elementarer Phosphor sowie Isocyanursäurederivate, wie Melamin, Dicyan-diamid und Guanidinsalze, z.B. Guanidincarbonat, zum Flammfestmachen der PUR/PIR-Schaumstoffe verwendet werden. Im allgemeinen hat es sich als vorteilhaft erwiesen, 5 bis 40 Gewichtsteile, vorzugsweise 10 bis 30 Gewichtsteile der genannten Flammschutzmittel für jeweils 100 Gewichtsteile der schäumfähigen Reaktionsmischung zu verwenden.

Nähere Angaben über die oben genannten anderen üblichen Zusatzstoffe sind der Fachliteratur, beispielsweise der Monographie von J.H. Saunders und K.C. Frisch «High Polymers» Band XVI, Polyurethanes, Teil 1 und 2, Verlag Interscience Publishers 1962 bzw. 1964, zu entnehmen.

Zur Herstellung von PUR/PIR-Schaumstoffen haben sich Mengenverhältnisse von NCO-Gruppen der Polyisocyanate zu reaktiven Wasserstoffatomen der Polyester-Polyol-Mischung und gegebenenfalls Kettenverlängerungsmittel von 2 bis 60 : 1, vorzugsweise von 2 bis 10 : 1 bewährt.

Die Polyurethangruppen enthaltenden Polyisocyanurat-Schaumstoffe werden vorzugsweise nach dem one shot-Verfahren hergestellt. Hierzu mischt man die Polyisocyanate mit der Polyester-polyol-Mischung, den Katalysatoren, Treibmittel und gegebenenfalls Hilfs- und Zusatzstoffen intensiv in den genannten Mengenverhältnissen bei Temperaturen von 0 bis 50°C, vorzugsweise 15 bis 40°C, und lässt danach die Reaktionsmischung in offenen oder geschlossen Formen aufschäumen.

Die unter Verwendung der erfindungsgemässen Additionsprodukte hergestellten PUR/PIR-Schaumstoffe besitzen bei freier Aufschäumung Dichten von 15 bis 100 g/l, vorzugsweise von 20 bis 60 g/l.

Die PUR/PIR-Schaumstoffe finden Verwendung als Isoliermaterialien in Kühlaggregaten, zum Verkleiden von Rohren und auf dem Bausektor.

Die in den Beispielen genannten Teile beziehen sich auf das Gewicht.

Herstellung der Additionsprodukte analog der Michael-Reaktion.

*Beispiel 1*

Zu 333,92 Gew.-Teilen (1,27 Mol) eines difunktionellen Polyester-polyoles mit einer Hydroxylzahl von 336, einer Säurezahl von 2 und einem Molekulargewichtsfaktor pro Doppelbindung von 262, hergestellt aus Maleinsäure, 1,3-Propylenglykol und Diethylenglykol im Molverhältnis 1 : 1 : 1 wurden unter Rühren bei 50°C 41,2 Gew.-Teile (0,4 Mol) Diethylentriamin hinzugefügt. Zur Vervollständigung der Umsetzung wurde noch 30 Minuten bei 50°C gerührt und danach das Additionsprodukt abkühlen gelassen.

*Beispiel 2*

Man verfuhr analog den Angaben von Beispiel 1, verwendete jedoch 83,2 Gew.-Teile (0,8 Mol) Aminoethylethanolamin.

Herstellung der Polyurethangruppen enthaltenden Polyisocyanuratschaumstoffe.

*Beispiele 3 bis 5 und Vergleichsbeispiel*

A-Komponente:

Mischung aus Polyether-polyol-dispersion,
Michael-Additionsprodukt,
Schaumstabilisator,
Katalysatoren und
Treibmittel.

B-Komponente:

Mischung aus Diphenylmethan-diisocyanaten und Polyphenyl-polymethylen-polyisocyanaten mit einem NCO-Gehalt von 31 Gew.-% (in der folgenden Tabelle abgekürzt Roh-MDI genannt).

Die Komponenten A und B wurden bei 23°C mit einem Intensivrührer 30 sec lang gemischt und in einem offenen Karton mit den Abmessungen 22 × 22 × 20 cm frei aufschäumen gelassen.

Die Art und Menge der verwendeten Ausgangskomponenten und die an den erhaltenen PUR/PIR-Schaumstoffen gemessenen mechanischen Eigenschaften sind in der folgenden Tabelle zusammengefasst.

Für die in der Tabelle genannten Ausgangskomponenten wurden die folgenden Abkürzungen gewählt.

PE-Disp.: Polyetherpolyol-dispersion mit einer OH-Zahl von 265, bestehend aus
48 Gew.-% eines Polyether-polyols mit einer Hydroxylzahl von 400 auf Basis einer Startermischung aus Sucrose, Glycerin und Wasser und 1,2-Propylenoxid
28 Gew.-% Diethylenglykoladipat mit einer Hydroxylzahl von 345 und
24 Gew.-% eines Neopentylglykolisophthalats mit einer Hydroxylzahl von 120.

Mi-Addp.: Additionsprodukt, hergestellt analog der Michael-Reaktion

DC 193: Silikon-Schaumstabilisator DC 193 der Firma Dow Corning

TEA: Triethylen-diamin

Kat. KF: Kaliumformiat; 35 gew.-%ige Lösung in Ethylenglykol

TMR 2: Katalysator auf Basis Trimethyl-2-hydroxypropylammoniumformiat, Handelsprodukt der Firma Air Products

R 11: Trichlorfluormethan

Tabelle

| Beispiele | | 3 | 4 | 5 | Vergleichsbeispiel |
|---|---|---|---|---|---|
| A-Komponente: | | | | | |
| PE-Disp. | (Gew.-Teile) | 118 | 118 | 118 | 100 |
| Mi-Addp. n. Beispiel 1 | » | 2 | 4 | — | — |
| Mi-Addp. n. Beispiel 2 | » | — | — | 2 | — |
| DC 193 | » | 1 | 1 | 1 | 2 |
| TEA | » | 0,07 | 0,07 | 0,07 | 0,2 |
| Kat. KF | » | — | 0,7 | 1,8 | 2 |
| TMR 2 | » | 1,1 | 0,2 | — | — |
| R 11 | » | 37 | 40 | 39 | 32,3 |
| B-Komponente: | | | | | |
| Roh-MDI | (Gew.-Teile) | 155 | 170 | 160 | 139 |
| Kenndaten: | | | | | |
| Startzeit | (sec) | 78 | 125 | 80 | 50 |
| Abbindezeit | (sec) | 180 | 245 | 126 | 95 |
| Steigzeit | (sec) | — | 320 | 180 | 195 |
| mechanische Eigenschaften | | | | | |
| Raumgewicht | (g/l) | 36 | 39 | 36 | 35 |
| Druckfestigkeit nach DIN 43 421 | ($N/mm^2$) | 0,23 | 0,25 | 0,26 | 0,22 |
| Biegefestigkeit nach DIN 53 423 | ($N/mm^2$) | 0,36 | 0,42 | 0,42 | 0,35 |
| Formbeständigkeit in der Wärme nach DIN 53 424 | °C | 183 | 169 | 192 | 182 |
| Bodenlunker: | | | | | |
| Tiefe | (cm) | 2,5 | — | 2,5 | 7 |
| Anzahl | | praktisch keine | keine | praktisch keine | viele |

**Patentansprüche**

1. Additionsprodukte, erhalten analog der Michael-Reaktion durch Umsetzung von

a) olefinisch ungesättigten Polyester-polyolen mit einer Funktionalität von 2 bis 6, einer Hydroxylzahl von 20 bis 800, einer Säurezahl von 0 bis 15 und einem Molekulargewichtsfaktor pro Doppelbindung von 150 bis 3000 mit

b) 0,1 bis 1 Molen, pro Mol olefinisch ungesättigter Doppelbindung der Komponente (a), eines Alkylenpolyamines der Formel

$$H_2N\text{-}R\text{-}NH\text{-}R'\text{-}X,$$

in der bedeuten:

X eine $NH_2$- oder OH-Gruppe,

R und R' gleiche oder verschiedene, lineare oder verzweigte Alkylenreste mit 2 bis 12 Kohlenstoffatomen.

2. Additionsprodukte nach Anspruch 1, dadurch gekennzeichnet, dass die Alkylenreste R und/oder R' -O-, -CO-, -S- und/oder -$SO_2$- Brückenglieder gebunden enthalten.

3. Additionsprodukte nach Anspruch 1, dadurch gekennzeichnet, dass man als Alkylenpolyamine Dialkylentriamine mit 2 bis 6 Kohlenstoffatomen in den Alkylenresten R und R' verwendet.

4. Additionsprodukte nach Anspruch 1, dadurch gekennzeichnet, dass man als Alkylenpolyamine Diethylentriamin, Di-1,3-propylen-triamin, Di-1,2--propylen-triamin und/oder Di-1,4-butylentriamin verwendet.

5. Additionsprodukte nach Anspruch 1, dadurch gekennzeichnet, dass man als Alkylenpolyamine Aminoalkylalkanolamine mit je 2 bis 6 Kohlenstoffatomen im Alkyl- und Alkanoylrest verwendet.

6. Additionsprodukte nach Anspruch 1, dadurch gekennzeichnet, dass man als Alkylenpolyamine Aminoethylethanolamin und/oder Aminoethylisopropanolamin verwendet.

7. Verfahren zur Herstellung von Additionsprodukten analog der Michael-Reaktion, dadurch gekennzeichnet, dass man

a) olefinisch ungesättigte Polyester-polyole mit einer Funktionalität von 2 bis 6, einer Hydroxylzahl von 20 bis 800, einer Säurezahl von 0 bis 15

und einem Molekulargewichtsfaktor pro Doppelbindung von 150 bis 3000 und

b) 0,1 bis 1 Mol, pro Mol olefinisch ungesättigter Doppelbindung der Komponente (a), eines Alkylenpolyamines der Formel

$H_2N$-R-NH-R'-X,

in der bedeuten:
X eine $NH_2$- oder OH-Gruppe,
R und R' gleiche oder verschiedene, lineare oder verzweigte, gegebenenfalls -O-, -CO-, -S- und/oder -$SO_2$-Brückenglieder gebunden enthaltende Alkylenreste mit 2 bis 12 Kohlenstoffatomen

in Gegenwart oder Abwesenheit von organischen Lösungsmitteln bei Temperaturen von 10 bis 100°C zur Reaktion bringt und danach gegebenenfalls das Lösungsmittel abtrennt.

8. Polyester-polyol-Mischung enthaltend
0,5 bis 4 Gew.-%, bezogen auf das Gesamtgewicht, mindestens eines Additionsproduktes nach Anspruch 1 und
99,5 bis 96 Gew.-%, bezogen auf das Gesamtgewicht, mindestens einer Polyhydroxylverbindung mit einer Funktionalität von 2 bis 8 und einer Hydroxylzahl von 150 bis 800.

9. Verwendung der Additionsprodukte nach Anspruch 1 als Zusatzmittel für Kunststoffe auf Polyisocyanatbasis.

10. Verbindung der Additionsprodukte nach Anspruch 1 als Zusatzmittel zur diskontinuierlichen Herstellung von Polyurethangruppen enthaltenden Polyisocyanuratschaumstoffen.

**Claims**

1. An adduct obtained by a procedure analogous to the Michael reaction, by reacting

a) an olefinically unsaturated polyester polyol having a functionality of 2 to 6, a hydroxyl number of 20 to 800, an acid number of 0 to 15 and a molecular weight of 150 to 3000 per double bond, with

b) 0.1 to 1 mole, per mole of olefinically unsaturated double bond of component (a), of an alkylene polyamine of the formula

$H_2N$-R-NH-R'-X,

where
X is an $NH_2$ or OH group, and
R and R' are identical or different, linear or branched alkylene radicals of 2 to 12 carbon atoms.

2. An adduct as claimed in claim 1, wherein the alkylene radicals R and/or R' contain -O-, -CO-, -S- and/or -$SO_2$- bridging members.

3. An adduct as claimed in claim 1, wherein dialkylene triamines, where the alkylene radicals R and R' are each of 2 to 6 carbon atoms, are used as alkylene polyamines.

4. An adduct as claimed in claim 1, wherein diethylenetriamine, di-1,3-propylenetriamine, di-1,2-propylenetriamine and/or di-1,4-butylenetriamine are used as alkylene polyamines.

5. An adduct as claimed in claim 1, wherein aminoalkylalkanolamines, where the alkyl and alkanol radicals are each of 2 to 6 carbon atoms, are used as alkylene polyamines.

6. An adduct as claimed in claim 1, wherein aminoethylethanolamine and/or aminoethylisopropanolamine are used as alkylene polyamines.

7. A process for the preparation of an adduct by a procedure analogous to the Michael reaction, wherein

a) an olefinically unsaturated polyester polyol having a functionality of 2 to 6, a hydroxyl number of 20 to 800, an acid number of 0 to 15 and a molecular weight of 150 to 3000 per double bond, and

b) 0.1 to 1 mole, per mole of olefinically unsaturated double bond of component (a), of an alkylene polyamine of the formula

$H_2N$-R-NH-R'-X,

where
X is an $NH_2$ or OH group, and
R and R' are identical or different, linear or branched alkylene radicals having 2 to 12 carbon atoms and optionally containing -O-, -CO-, -S- and/or -$SO_2$- bridging members,

are reacted at 10 to 100°C in the presence or absence of an organic solvent, and then, if desired, the solvent is separated off.

8. A polyester polyol mixture containing
0.5 to 4% by weight, based on the total weight, of at least one adduct as claimed in claim 1, and
99.5 to 96% by weight, based on the total weight, of at least one polyhydroxy compound having a functionality of 2 to 8 and a hydroxyl number of 150 to 800.

9. The use of an adduct as claimed in claim 1 as an additive for plastics based on polyisocyanate.

10. The use of an adduct as claimed in claim 1 as an additive for the batchwise production of polyisocyanurate foams containing polyurethane groups.

**Revendications**

1. Produits d'addition, obtenus de façon analogue à la réaction de Michael, par réaction

a) de polyesters-polyols insaturés oléfiniquement, d'une fonctionnalité de 2 à 6, d'un indice d'hydroxyle de 20 à 800, d'un indice d'acide de 0 à 15 et d'un facteur de poids moléculaire par double liaison de 150 à 3000, avec

b) 0,1 à 1 mole, par mole de double liaison insaturée oléfiniquement du composant (a), d'une alkylène-polyamine de formule

$H_2N$-R-NH-R'-X,

dans laquelle
X représente un groupe $NH_2$ ou OH,
R et R', identiques ou différents, représentent des restes alkylène, linéaires ou ramifiés, ayant 2 à 12 atomes de carbone.

2. Produits d'addition selon la revendication 1, caractérisé par le fait que les restes alkylène R et/ou

R' contiennent, liés, des ponts -O-, -CO-, -S- et/ou $-SO_2-$.

3. Produits d'addition selon la revendication 1, caractérisé par le fait que l'on utilise, comme alkylènepolyamine, une dialkylènetriamine de 2 à 6 atomes de carbone dans les restes alkylène R et R'.

4. Produits d'addition selon la revendication 1, caractérisé par le fait que l'on utilise, comme alkylènepolyamine, la diéthylènetriamine, la di-1,3-propylènetriamine la di-1,2-propylènetriamine et/ou la di-1,4-butylènetriamine.

5. Produits d'addition selon la revendication 1, caractérisé par le fait que l'on utilise, comme alkylènepolyamine, une aminoalkylalcanolamine ayant 2 à 6 atomes de carbone dans chaque reste alkyle ou alcanol.

6. Produits d'addition selon la revendication 1, caractérisé par le fait que l'on utilise, comme alkylènepolyamine, l'aminoéthyléthanolamine et/ou l'aminoéthylisopropanolamine.

7. Procédé de préparation de produits d'addition, de façon analogue à la réaction de Michael, caractérisé par le fait que l'on fait réagir, à des températures de 10 à 100°C, en présence ou en l'absence de solvants organiques

a) des polyesters-polyols insaturés oléfiniquement, d'une fonctionnalité de 2 à 6, d'un indice d'hydroxyle de 20 à 800, d'un indice d'acide de 0 à 15 et d'un facteur de poids moléculaire par double liaison de 150 à 3000, avec

b) 0,1 à 1 mole, par mole de double liaison insaturée oléfiniquement du composant (a), d'une alkylènepolyamine de formule

$$H_2N\text{-}R\text{-}NH\text{-}R'\text{-}X,$$

dans laquelle

X représente un groupe $NH_2$ ou OH,

R et R', identiques ou différents, représentent des restes alkylène, linéaires ou ramifiés, ayant 2 à 12 atomes de carbone et contenant éventuellement, liés, des ponts -O-, -CO-, -S- et/ou $-SO_2-$.

8. Mélange de polyester-polyol contenant

0,5 à 4% en poids, rapportés au poids total, d'au moins un produit d'addition selon la revendication 1 et

99,5 à 96% en poids, rapportés au poids total, d'au moins un composé polyhydroxyle d'une fonctionnalité de 2 à 8 et d'un indice d'hydroxyle de 150 à 800.

9. Utilisation des produits d'addition selon la revendication 1 comme agents d'addition pour matières plastiques à base de polyisocyanate.

10. Utilisation des produits d'addition selon la revendication 1 comme agents d'addition pour la préparation en discontinu de matières alvéolaires, à base de polyisocyanurate, contenant des groupes polyuréthane.